# EUROPEAN PATENT APPLICATION

(11) **EP 1 750 318 A1**
(43) Date of publication of application: **07.02.2007**
(21) Application number: 06117868.7
(22) Date of filing: 26.07.2006
(51) Int. Cl.: H01M 4/92, H01M 8/10

(54) **Cathode catalyst for fuel cell, and membrane-electrode assembly and fuel cell system comprising same**

(30) Priority: 29.07.2005 KR 20050069445
(71) Applicant: Samsung SDI Co., Ltd., Suwon-si Gyeonggi-do (KR)
(72) Inventor: Alexandrovichserov, Alexey, Kiheung-Eup Yongin-City Kyeonggi-Do (KR); Kwak, Chan, Kiheung-Eug Yongin-City Kyeonggi-Do (KR); Lee, Si-Hyun, Kiheung-Eup Yongin-City Kyeonggi-Do (KR)
(74) Representative: Hengelhaupt, Jürgen

(57) **Abstract**

The invention relates to a cathode catalyst for a fuel cell that includes Ru, M, and Te, wherein M is Mo, W, or an alloy thereof. The cathode catalyst can inhibit catalyst poisoning by oxygen and improve catalyst activity.

## Description

### FIELD OF THE INVENTION

The invention relates to a cathode catalyst for a fuel cell, and a membrane-electrode assembly and a fuel cell system including the same. More particularly, the invention relates to a cathode catalyst having excellent activity, and a membrane-electrode assembly, a fuel cell system including the same as well as to methods for preparation of the cathode catalyst.

### BACKGROUND OF THE INVENTION

A fuel cell is a power generation system for producing electrical energy through an electrochemical redox reaction of an oxidant and a fuel such as hydrogen, or a hydrocarbon-based material such as methanol, ethanol, natural gas, and the like. Such fuel cells include a stack composed of unit cells and produce various ranges of power output. Since they have an energy density four to ten times higher than a small lithium battery, fuel cells have been highlighted as small portable power sources.

Representative exemplary fuel cells include a polymer electrolyte membrane fuel cell (PEMFC) and a direct oxidation fuel cell (DOFC). The direct oxidation fuel cell includes a direct methanol fuel cell that uses methanol as a fuel.

The polymer electrolyte fuel cell has the advantages of high energy density and high power, but it also has problems in the need to carefully handle hydrogen gas, and the requirement of accessory facilities, such as a fuel reforming processor, for reforming methane or methanol, natural gas, and the like in order to produce hydrogen as the fuel gas.

On the contrary, a direct oxidation fuel cell has a lower energy density than that of the gas-type fuel cell and needs a large amount of catalyst, but it has the advantages of easy handling of the liquid-type fuel, low operation temperature, and no need for additional fuel reforming processors. Therefore, it has been acknowledged as an appropriate system for a portable power source for small and common electrical equipment.

In the above-mentioned fuel cell system, the stack that generates electricity substantially includes a plurality of unit cells stacked adjacent to one another, and each unit cell is formed of a membrane-electrode assembly (MEA) and a separator (also referred to as a bipolar plate). The membrane-electrode assembly is composed of an anode (also referred to as a "fuel electrode" or an "oxidation electrode") and a cathode (also referred to as an "air electrode" or a "reduction electrode") that are separated by a polymer electrolyte membrane.

A fuel is supplied to an anode and is adsorbed on catalysts, and the fuel is oxidized to produce protons and electrons. The electrons are transferred to a cathode via an out-circuit, and the protons are transferred into a cathode through a polymer electrolyte membrane. An oxidant is supplied to a cathode, and the oxidant, protons, and electrons are reacted on a catalyst at a cathode to produce electricity along with water.

### SUMMARY OF THE INVENTION

An aspect of the invention is to provide a highly active cathode catalyst for a fuel cell.

Another aspect of the invention is to provide a cathode catalyst that inhibits catalyst poisoning.

Another aspect of the invention is to provide a membrane-electrode assembly that includes the above cathode catalyst.

Another aspect of the invention is to provide a membrane-electrode assembly that includes the above membrane-electrode assembly.

According to a first aspect of the invention, there is provided a cathode catalyst for a fuel cell comprising Ru, M, and Te, wherein M is Mo, W, or an alloy thereof.

According to an embodiment of the invention, the cathode catalyst includes Ru, Mo, and Te.

According to an embodiment of the invention, the mole ratios of Ru, M, and Te are in the range of 10 to 95 : 5 to 40 : 0.1 to 50.

According to another embodiment of the invention, the catalyst has an average particle diameter in the range of 1 to 25 nm.

According to a second aspect of the invention, there is provided a membrane-electrode assembly, which includes an anode and a cathode facing each other, and a polymer electrolyte membrane interposed between the anode and the cathode, wherein the cathode comprises the above-mentioned cathode catalyst.

According to a third aspect of the invention, there is provided a fuel cell system, which includes an at least one electricity generating element comprising the above membrane-electrode assembly, separators arranged at each side of the membrane-electrode assembly, a fuel supplier, and an oxidant supplier.

According to another aspect of the invention, there are provided two methods for preparing the above cathode catalyst. According to a first method a Ru source, an M source, and elementary Te are reacted in a solvent in a predetermined appropriate mole ratio. According to a second method a Ru source and an M source are mixed in a solvent in a predetermined appropriate mole ratio, and then a Te source is added to the mixture.

### BRIEF DESCRIPTION OF THE DRAWING

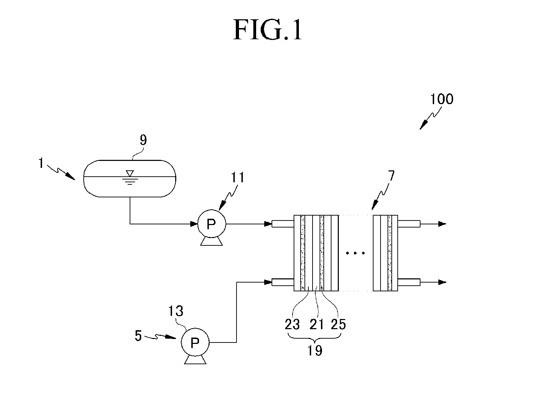

FIG. 1 is a schematic view showing a structure of a fuel cell system.

### DETAILED DESCRIPTION OF THE INVENTION

Ru-containing catalysts have been researched as a substitute for a Pt cathode catalyst. For example, U.S. Patent Publication No. 2004/0086772 A1 described a Ru-Mo-S or Ru-Mo-Se catalyst that is capable of preventing a catalyst from being poisoned by CO, but it is not satisfactory. In addition, these catalysts are not effective for preventing the catalyst from being poisoned by an oxidant at a cathode of a direct oxidation fuel cell.

The invention relates to a catalyst used for a cathode of a fuel cell which includes Ru, M, and Te, which can be called a Ru-M-Te catalyst wherein M is Mo, W, or an alloy thereof. Preferably, M is Mo. In an additional embodiment, the catalyst has a mole ratio of Ru, M, and Te ranging from 10 to 95 (Ru) : 5 to 40 (M) : 0.1 to 50 (Te).

Since the catalyst includes Te, it can effectively prevent the Ru surface of the catalyst present at a cathode from being poisoned by an oxidant. The above catalyst poisoning by an oxidant is a phenomenon in which the oxidant surrounds active sites of a cathode catalyst, so that the active sites are deactivated. However the invention can protect Ru from being poisoned by the oxidant by using Te. In addition, since Te has greater metallicity than S or Se, which belong to the same 6A group of the periodic table, the Ru-M-Te catalyst has much better electro-conductivity than the conventional Ru-Mo-S or Ru-Mo-Se catalyst.

Furthermore, Te supports the formation of an amorphous phase of the catalyst, which has much better activity than a crystalline catalyst.

When Ru and M promote the oxidation reaction of the oxidant, Te surrounds active sites of Ru and M, playing a role of preventing the oxidant from surrounding the active sites. Therefore, the Te content of the catalyst of the invention can enhance catalyst activity.

Preferably, the catalyst has an average particle diameter ranging from 1 to 25 nm, which is smaller than that of a Ru-M-S catalyst which ranges from 4 to 50 nm. Accordingly, since the catalyst (a black catalyst) can have an extended active surface area of up to 50 to 150 m²/g, it can provide more catalyst active points, thereby improving catalyst activity.

On the other hand, a catalyst for a cathode of the invention can be supported in a carbon carrier. Suitable carriers include carbon such as acetylene black, ketjen black, denka black, activated carbon, and graphite.

The above catalyst for a fuel cell cathode of the invention can be prepared by the two following methods.

According to a first method, it can be prepared by a wet impregnation process, in which a Ru source, an M source, and elementary Te are reacted in a solvent in a predetermined appropriate mole ratio. Examples of the Ru source include ruthenium carbonyl, ruthenium acetylacetonate, or ruthenium alkoxide. When M is Mo, examples of the Mo source include molybdenum carbonyl, molybdenum acetylacetonate, or molybdenum alkoxide, and when M is W, examples of W source include metatungstates or tungstates such as ammonium metatungstate, ammonium tungstate, ammonium paratungstate, sodium metatungstate, sodium polytungstate, or lithium metatungstate. When the M is a Mo-W alloy, the Mo source and the W source can be used in combinations. Examples of the solvent may include an aromatic hydrocarbon solvent such as m-xylene, benzene, or toluene. Here, the precursors are mixed in only one step to prepare a catalyst of a predetermined composition.

According to another method, the catalyst for the cathode can be prepared through two steps by using an organic solvent precursor and a Te source. In the first step, a Ru source and an M source as an organic solvent precursor are mixed in a solvent in a predetermined appropriate mole ratio, and then a Te source such as H₂TeO₃ is added to the mixture. As for the Ru source and M source, the aforementioned can be used, and as for the solvent, acetone, m-xylene, benzene, or toluene can be used.

Preferably, a heat treatment is performed at 140 to 350°C to prevent the coagulation of catalyst particles. When the catalyst particles are hindered from being coagulated in this way, a catalyst can be prepared with a smaller diameter, thereby increasing catalyst active areas and improving catalyst activity.

The above catalyst is used in a cathode, whereas a generally used platinum-based catalyst may be used for the anode. In one embodiment, the anode catalyst includes platinum, ruthenium, osmium, platinum-ruthenium alloys, platinum-osmium alloys, platinum-palladium alloys, and platinum-M alloys, where M is at least one metal selected from the group consisting of Ga, Ti, V, Cr, Mn, Fe, Co, Ni, Cu, and Zn. In another embodiment, catalysts are selected from the group consisting of platinum, ruthenium, osmium, platinum-ruthenium alloys, platinum-osmium alloys, platinum-palladium alloys, platinum-cobalt alloys, and platinum-nickel alloys.

The cathode catalyst may be used as a black type or may be supported with a carrier. Suitable carriers include carbon such as acetylene black, denka black, activated carbon, ketjen black, or graphite, and inorganic particulates such as alumina, silica, titania, zirconia, etc.

The catalysts for the cathode and anode are present on an electrode substrate. The electrode substrate plays a role of supporting an electrode, and also of spreading a fuel and an oxidant to a catalyst layer to help the fuel and oxidant easily approach the catalyst layer. In an embodiment, a conductive substrate is used for the electrode substrate, for example carbon paper, carbon cloth, carbon felt, or a metal cloth (a porous film comprising metal cloth fiber or a metalized polymer fiber), but is not limited thereto.

In one embodiment, a micro-porous layer (MPL) can be added between the electrode substrate and catalyst layer to increase reactant diffusion effects. In general, the microporous layer may include, but is not limited to, a small-sized conductive powder such as a carbon powder, carbon black, acetylene black, activated carbon, carbon fiber, fullerene, nano-carbon, or a combination thereof. The nano-carbon may include a material such as carbon nanotubes, carbon nanofiber, carbon nanowire, carbon nanohorns, carbon nanorings, or combinations thereof. In an embodiment, the microporous layer is formed by coating a composition including a conductive powder, a binder resin, and a solvent on the conductive substrate. The fluorinated resin may include, but is not limited to, polytetrafluoro ethylene (PTFE), polyvinylidene fluoride, polyhexafluoro propylene, polyperfluoroalkylvinyl ether, polyperfluoro sulfonyl fluoride, alkoxy vinyl ether, polyvinylalcohol, cellulose acetate, and copolymers thereof. The solvent may include, but is not limited to, an alcohol such as ethanol, isopropyl alcohol, n-propyl alcohol, butyl alcohol, etc., water, dimethyl acetamide, dimethyl sulfoxide, N-methylpyrrolidone, and so on. The coating method may include, but is not limited to, screen printing, spray coating, doctor blade methods, gravure coating, dip coating, silk screening, painting, and so on, depending on the viscosity of the composition.

According to another embodiment, a membrane-electrode assembly includes a polymer electrolyte membrane interposed between the cathode and the anode.

The polymer electrolyte membrane performs an ion exchange function to transfer protons generated in the catalyst of an anode to the cathode, and thus highly proton-conductive polymers may be used for the polymer electrolyte membrane. In one embodiment, the proton-conductive polymer may be a polymer resin having a cation exchange group selected from the group consisting of a sulfonic acid group, a carboxylic acid group, a phosphoric acid group, a phosphonic acid group, and derivatives thereof, at its side chain.

Non-limiting examples of the polymer include a proton-conductive polymer selected from the group consisting of perfluoro-based polymers, benzimidazole-based polymers, polyimide-based polymers, polyetherimide-based polymers, polyphenylenesulfide-based polymers polysulfone-based polymers, polyethersulfone-based polymers, polyetherketone-based polymers, polyether-etherketone-based polymers, polyphenylquinoxaline-based polymers, and combinations thereof. In one embodiment, the proton-conductive polymer is selected from the group consisting of poly(perfluorosulfonic acid), poly(perfluorocarboxylic acid), a copolymer of tetrafluoroethylene and fluorovinylether having a sulfonic acid group, defluorinated polyetherketone sulfide, aryl ketone, poly(2,2'-(m-phenylene)-5,5'-bibenzimidazole), poly (2,5-benzimidazole), and combinations thereof. In an embodiment, the polymer electrolyte membrane may have a thickness ranging from 10 to 200 µm.

In one embodiment, a fuel cell system including the membrane-electrode assembly of the invention includes at least one electricity generating element, a fuel supplier, and an oxidant supplier.

The electricity generating element includes a membrane-electrode assembly and separators (referred to also as bipolar plates) positioned at both sides of the membrane-electrode assembly. It generates electricity through oxidation of fuel and reduction of an oxidant.

The fuel supplier plays a role of supplying the electricity generating element with a fuel including hydrogen, and the oxidant supplier plays a role of supplying the electricity generating element with an oxidant. In one embodiment, the fuel includes liquid or gaseous hydrogen, or a hydrocarbon-based fuel such as methanol, ethanol, propanol, butanol, or natural gas.

FIG. 1 shows a schematic structure of a fuel cell system that will be described in detail with reference to this accompanying drawing as follows. FIG. 1 illustrates a fuel cell system according to an embodiment, wherein a fuel and an oxidant are provided to the electricity generating element through pumps, but the invention is not limited to such structures. In another embodiment, the fuel cell system of the invention alternately includes a structure wherein a fuel and an oxidant are provided in a diffusion manner.

According to one embodiment, a fuel cell system 100 includes a stack 7 composed of at least one electricity generating element 19 that generates electrical energy through the electrochemical reaction of a fuel and an oxidant, a fuel supplier 1 for supplying a fuel to the electricity generating element 19, and an oxidant supplier 5 for supplying oxidant to the electricity generating element 19.

The fuel supplier 1 is equipped with a tank 9, which stores fuel, and a pump 11, which is connected therewith. The fuel pump 11 supplies fuel that is stored in the tank 9 with a predetermined pumping power.

The oxidant supplier 5, which supplies the electricity generating element 19 of the stack 7 with an oxidant, is equipped with at least one pump 13 for supplying an oxidant with a predetermined pumping power.

The electricity generating element 19 includes a membrane-electrode assembly 21, which oxidizes hydrogen or a fuel and reduces an oxidant, and separators 23 and 25 that are respectively positioned at opposite sides of the membrane-electrode assembly and that supply hydrogen or a fuel, and an oxidant, respectively.

The following examples illustrate the invention in more detail; however, it is understood that the invention is not limited by these examples.

### Example 1

Mo(CO)₆, Ru₃(CO)₁₂, and Te were reacted in m-xylene, and then all of the m-xylene was evaporated. The resulting product was fired at 200°C to prepare a Ru-Mo-Te black powder catalyst (molar ratio 58:21:21).

### Example 2

Mo(CO)₆ and Ru₃(CO)₁₂ were dissolved in acetone, and then all of the acetone was evaporated. The obtained mixture was dried at 70°C, and H₂TeO₃ dissolved in acetone was added thereto. The resulting mixture was dried under a vacuum atmosphere at 200°C, and then fired under a hydrogen atmosphere at 250°C to prepare a Ru-Mo-Te black powder catalyst (molar ratio 63:24:13).

### Comparative Example 1

Mo(CO)₆, Ru₃(CO)₁₂, and S were reacted in m-xylene, and then all of the m-xylene was evaporated. The resulting product was fired at 200°C to prepare a Ru-Mo-S black powder catalyst.

### Comparative Example 2

Mo(CO)₆ and Ru₃(CO)₁₂ were dissolved in acetone, and then all of the acetone was evaporated. The obtained mixture was dried at 70°C, and H₂SeO₃ dissolved in acetone was added thereto. The resulting mixture was dried under a vacuum atmosphere at 200°C, and then fired under a hydrogen atmosphere at 250°C to prepare a Ru-Mo-Se black powder catalyst.

Then, slurries were prepared by respectively mixing a 5wt%-Nafion/H₂O/2-propanol solution (Solution Technology Inc., EW1100), with the catalysts according to Examples 1 to 2 and Comparative Examples 1 to 2. The slurries were screen-printed on a tetrafluoroethylne (TEFLON) film and dried to form a catalyst layer. The catalyst layer was positioned on the prepared polymer electrolyte membrane and hot-pressed with a pressure of 200 kgf/cm² at 200°C for 3 minutes, forming cathodes with respective loading of 4 mg/cm².

A slurry was prepared by respectively mixing a 5wt%-Nafion/H₂O/2-propanol solution (Solution Technology Inc., EW1100), with Pt black (Johnson Matthey, HiSpec 1000) particles. The slurry was screen-printed on a tetrafluoroethylne (TEFLON) film and dried to form a catalyst layer. The catalyst layer was positioned on the prepared polymer electrolyte membrane and hot-pressed with a pressure of 200 kgf/cm² at 200°C for 3 minutes, forming an anode with respective loading of 4 mg/cm².

Then, ELAT diffusion layers (E-Tek co.) were positioned at the cathode and anode with the polymer electrolyte membranes positioned in the middle and assembled together, fabricating membrane-electrode assemblies.

Each membrane-electrode assembly was interposed between a gasket and glass fiber coated with polytetrafluoroethylene, and also interposed between two separators equipped with a flow channel and a cooling channel with a predetermined shape, and was then compressed between copper-end plates to fabricate each single cell.

With respect to the single cell fabricated as above, 50% humidified air and hydrogen were respectively supplied to the cathode and anode without back pressure, and the cells were operated at 60 °C. The current densities at 0.7V were measured and the results are given in Table 1.

**Table 1**

| | Current density, mA/cm² (0.7 V) |
|---|---|
| Example 1 | 1.52 |
| Example 2 | 1.71 |
| Comparative Example 1 | 0.57 |
| Comparative Example 2 | 0.75 |

As can be seen from the measurement results of Table 1, the fuel cells including catalysts according to Examples 1 and 2 have improved current density over Comparative Examples 1 and 2.

The invention can provide a catalyst for a fuel cell cathode, which can prevent oxygen poisoning to improve catalyst activity.

## Claims

1. A cathode catalyst for a fuel cell comprising Ru, M, and Te, wherein M is Mo, W, or an alloy thereof.

2. The cathode catalyst of claim 1, wherein mole ratios of the Ru, M, and Te are in the range of 10 to 95 : 5 to 40 : 0.1 to 50.

3. The cathode catalyst of claim 1, wherein the catalyst has an average particle diameter in the range of 1 to 25 nm.

4. A membrane-electrode assembly, comprising:
an anode and a cathode facing each other; and
a polymer electrolyte membrane interposed between the anode and the cathode,
wherein the cathode comprises a cathode catalyst according to any of claims 1 to 3.

5. A fuel system comprising:
at least one electricity generating element comprising
at least one membrane-electrode assembly according to claim 4, and
separators arranged at each side of the membrane-electrode assembly;
a fuel supplier; and
an oxidant supplier.

6. Method for preparing a cathode catalyst according to any of the claims 1 to 3, wherein a Ru source, an M source, and elementary Te are reacted in a solvent in a predetermined appropriate mole ratio.

7. Method for preparing a cathode catalyst according to any of the claims 1 to 3, wherein a Ru source and an M source are mixed in a solvent in a predetermined appropriate mole ratio, and then a Te source is added to the mixture.
